# EUROPEAN PATENT APPLICATION

(11) **EP 3 819 090 A1**
(43) Date of publication of application: **12.05.2021**
(21) Application number: 20201475.9
(22) Date of filing: 13.10.2020
(51) Int. Cl.: B25J 9/16

(54) **CONTROL SYSTEM FOR A MACHINING OPERATION**

(30) Priority: 06.11.2019 GB 201916151
(71) Applicant: Rolls-Royce plc, London N1 9FX (GB)
(72) Inventor: Wee, Arthur, Derby, Derbyshire DE24 8BJ (GB); Bin Roslan, Muhammad Izzat, Derby, Derbyshire DE24 8BJ (GB); Campolo, Domenico, Derby, Derbyshire DE24 8BJ (GB); Dhanya, Menoth Mohan, Derby, Derbyshire DE24 8BJ (GB); Phan, Gia Hoang, Derby, Derbyshire DE24 8BJ (GB); Kana, Sreekanth, Derby, Derbyshire DE24 8BJ (GB)
(74) Representative: Rolls-Royce plc

(57) **Abstract**

Disclosed herein is an impedance control system for a robot arm. The system is able to provide at least two different levels of stiffness/compliance, and values for stiffness/compliance in the can be independently defined and set in at least first and second directions. Specifically, this allows the stiffness in said first direction to be set at a lower value than the stiffness in said second direction within the control system.

## Description

The present disclosure relates generally to industrial machining during the manufacturing process, and more particularly concerns a finesse surface finishing system and method.

Surface finishing is an important stage of many manufacturing processes, particularly in mechanical systems where a tight tolerance is required between moving components. For engine components such as turbine blades, surface finish is often of paramount importance.

Finesse finishing processes, which involve low rates of material removal, are generally highly labour-intensive tasks. Automated systems often fail to provide comparable result to a skilled human operator, because they are unable to sense and react to the interaction dynamics with the workpiece and implement appropriate control to adjust the movement and pressure accordingly. As a result, it remains common for skilled operators to perform the finesse finishing process.

Automated systems do, however, have potential advantages in terms of speed and consistency. High quality surface finishing requires accurate control of the material removal rate, which in turn depends on the speed of the abrasive tools/media as well as the contact force.

Position and force control strategies are common in automated machining and repair operations. Besides position and force, stiffness or compliance is the other key factor which must be considered in order to carry out finesse tasks and is typically regulated by skilled operators' muscular systems. A control strategy that incorporates all three factors is in general called impedance control.

This disclosure provides an impedance control-based system for performing machining, in particular finishing, processes.

Industrial robot controller architecture most typically uses a position-based force control approach.

Currently, most of the systems rely on sensor information, specifically the force sensor data, to generate the required path and control for the robot to perform the operations. e.g.,
1. Offline 3D path calculation combined with real-time dynamic path adjustment to improve surface finish;
2. Use of force sensor to give a controlled material removal rate and/or deformation compensation;
3. Inputs from different sensors (force gauge, displacement sensors, and encoder) used to generate motion program to the robot.

CN 102 922 388 A, for example, relies on implementing an active compliance control module to control the robot trajectory, research selling speed, and polishing pressure. US 8,550,876 B2 uses a magnetic constant-force device to implement force control. US 8,747,188 B2 discloses a method and apparatus for 3D part surface finishing, which implements motion control (i.e., position, orientation, and velocity) through force feedback.

In contrast, the present disclosure provides finesse finishing by alternative means relying more on stiffness and damping parameter adjustments.

According to a first aspect of the disclosure there is provided an impedance control system for a robot arm, wherein stiffness/impedance values can be independently set/defined in first and second directions, the second direction being orthogonal to the first direction, and wherein the stiffness in said first direction is set at a lower value than the stiffness in said second direction.

A stiffness value may also be independently set in a third orthogonal direction.

The stiffness in said first direction may be set at a lower value than the stiffness in said third direction.

The stiffness in said second direction may be set at an equal value to the stiffness in said third direction.

Also provided is a material removal apparatus comprising a robot arm, a tool for removing material supported by the robot arm and an impedance control system as previously described.

Also provided is a method of machining a workpiece comprising material removal apparatus as previously described, wherein said first direction is the direction of movement of a tool across the workpiece.

The movement of a tool across the workpiece may be controlled by a human operator.

The movement of a tool across the workpiece may be at least partly automated.

Said first direction may be defined by a tool path provided to the control system. The tool path may be generally linear, curved, serpentine or convoluted, and/or may follow an edge of a workpiece.

The machining may comprise finesse finishing of a component such as a turbine blade for a gas turbine engine.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** illustrates the stages in a known system for smart automation of robotic surface finishing;
**Figure 3** is a schematic illustration of experimental apparatus for performing a finesse finishing operation;
**Figure 4** is a schematic illustration of a chamfering operation; and
**Figure 5** is a schematic illustration of tool motion.

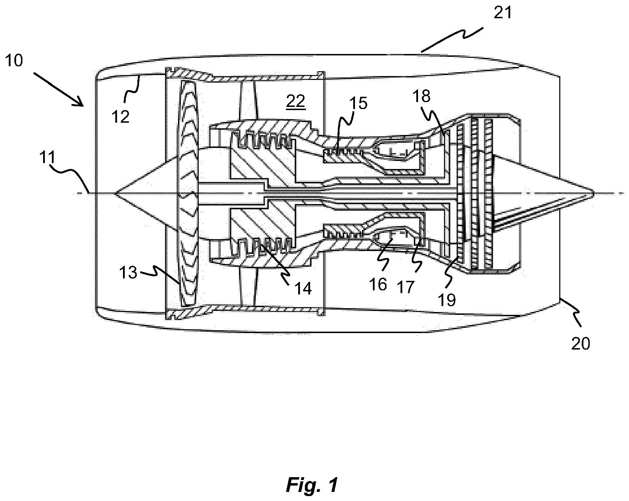

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

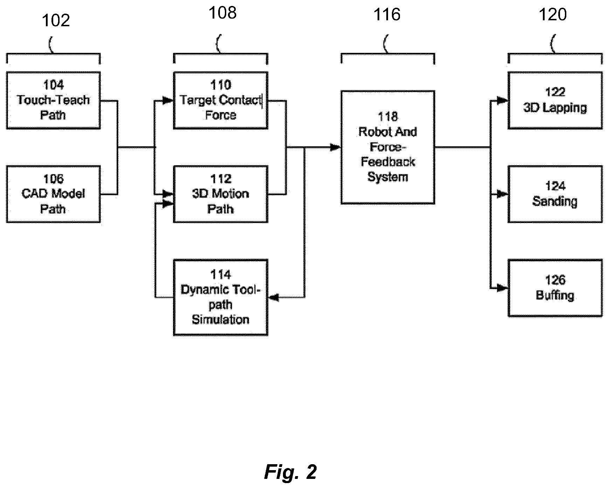

**Figure 2** illustrates the stages in a known system and method for smart automation of robotic surface finishing. The method comprises the following steps:
- Creating a 3D motion path 102 generated from either robot teaching 104 or CAD model 106
- Generating a variable contact force profile for the 3D motion path
- Modifying the 3D path 108 based on the motion path generated
- Executing 116 and applying 118 the modified path such that the surface is finished along the modified 3D path.

The robot path execution 116 is carried out using a force feedback system 118.

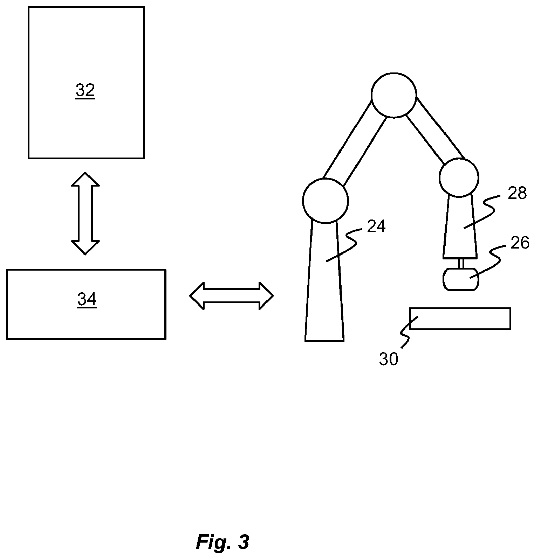

**Figure 3** shows an experimental setup of apparatus to perform a finishing operation according to the present disclosure.

The apparatus comprises a compliant robot 24 supporting an abrasive tool 26 driven by a tool driver 28 for removing material from a workpiece 30. Control is provided by a workstation PC 32 and controller 34, and spindle. Load sensors and a data acquisition device provide feedback. The implementation of tooling process based on impedance control model can be achieved using different software platforms, for example the java sunrise workbench platform integrated with iiwa operation system or MATLAB Simulink connected with DAS-controller and through KUKA control to operate the robot 24.

Various criteria were applied to the selection of a suitable robot 24 for the testing/experimental setup. The ability of the robot 24 to facilitate stiffness and damping adjustments was considered, as was whether an open control architecture, where users are allowed to modify the control architecture according to test cases, was provided. The number of joints provided was also taken into consideration.

The selected robot 24 was KUKA LBR iiwa 7 R800, which provides 7 joints and 7 kg payload and allows the users to modulate joint and cartessian stiffness as well as damping. No modification was needed to the hardware of the KUKA LBR iiwa 7 R800 in the study. It should be understood, however, that with suitable modification a number of alternative robots would also be suitable.

KUKA Sunrise.OS is the system software for all KUKA lightweight robots. It provides function for operator control of lightweight robots. The KUKA Sunrise.OS offers innovative functions for programming, planning and configuration applications for lightweight robot, together with the offline programming software, KUKA Sunrise.Workbench.

KUKA Sunrise.Workbench is the tool for the start-up of a station and the development of robot applications. It is based on Eclipse IDE. The KUKA Sunrise.Workbench facilitates Sunrise.OS installation, configuration, and application development, etc.

A Dremel 4000 was selected to drive the abrasive tool 26. This provided a relatively small lightweight power drive 28 for manipulation by the selected robot 24 within its relatively small 7 kg payload. It is also applicable to numerous finesse finishing tasks, suitable for accessing relatively narrow features, has adjustable rotational speed and the ability to provide relatively high rotational speed. The electrical drive is also able to maintain rotational speed during a finesse material removal processes.

Since appropriate multi-joint compliant robot arms are often designed for relatively low payloads, suitable abrasive tools 26 are also preferably light in weight. A suitable abrasive should also be applicable to numerous surface finishing tasks and for accessing relatively narrow features, and should also be suitable for various workpiece materials, available in wide range of hardnesses and/or abrasive particle size, able to withstand relatively high application load, and operable at relatively high rotational speed.

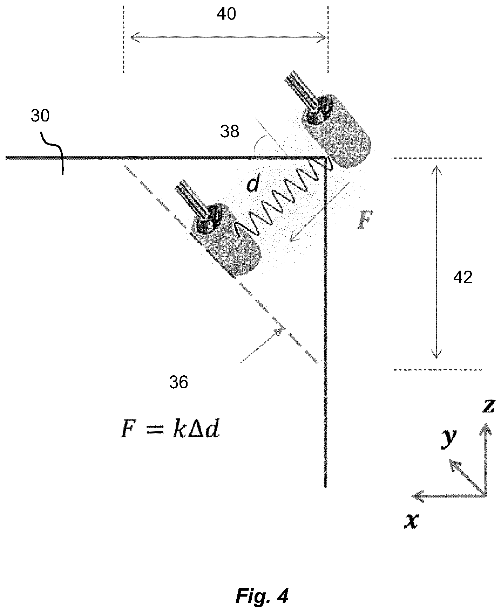

An example of the impedance control strategy is provided below in the form of an edge chamfering process, as schematically illustrated in **Figure 4****.** High stiffness values are provided in both x and z axes as shown, while a lower stiffness is given for the y-direction. Aligning the y axis with an edge to be chamfered enables an operator to guide the robot 24, and therefore the tool 26, easily along the direction of the edge. In the illustrated example a chamfer 36 is provided on an edge of the workpiece 30 at an angle 38 of 45 degrees. In both the x and y axes the offset 40,42 for the chamfer 36 is 1mm. The force required for a given material removal rate is indirectly imposed through the virtual spring force, k and the distance between the actual and commanded position of the tool centre point (TCP) Δd.

Both autonomous robot operation and collaborative operation can be accomplished using the described strategy. In the collaborative mode, the robot 24 will hold the tool 26 against the gravity, and the tool 26 will be guided by the operation without concern about tool weight or issues associated with tool orientation.

The sample code used for the chamfering process is given below:

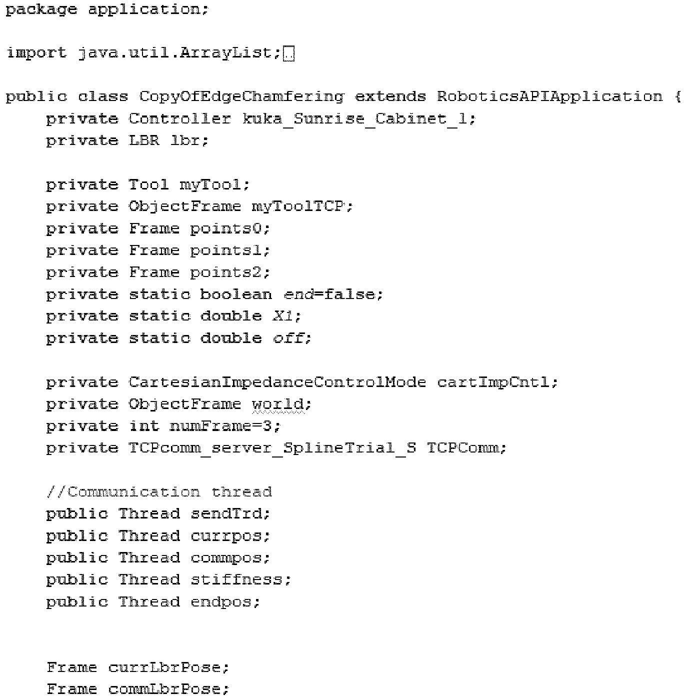

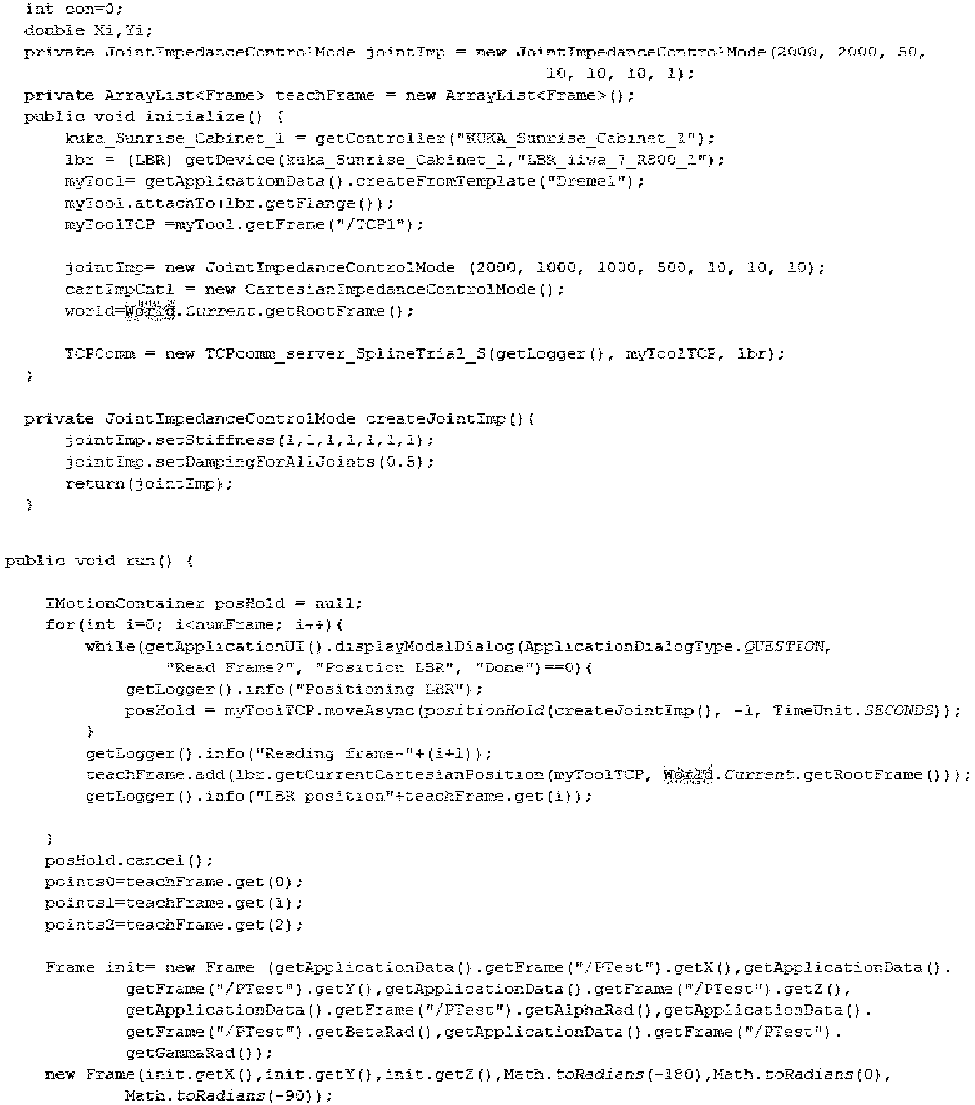

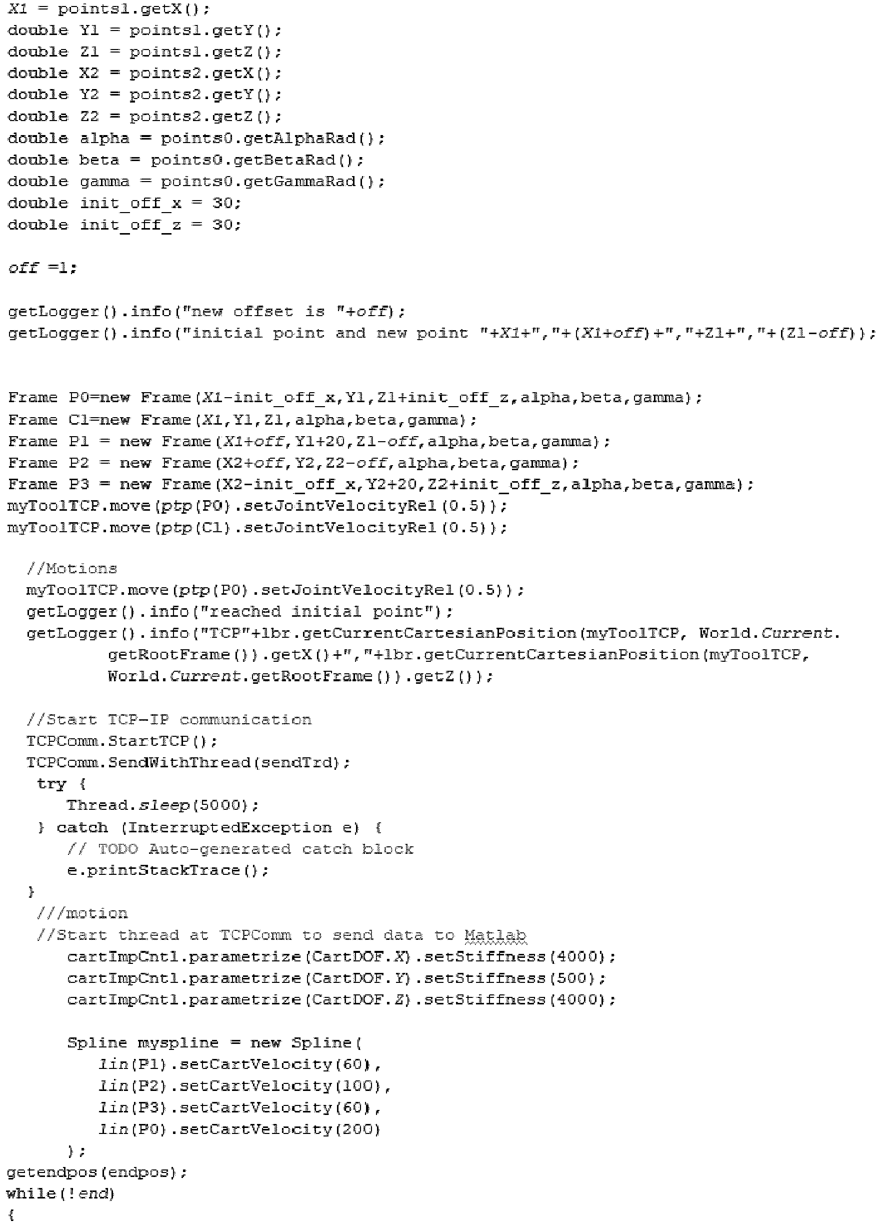

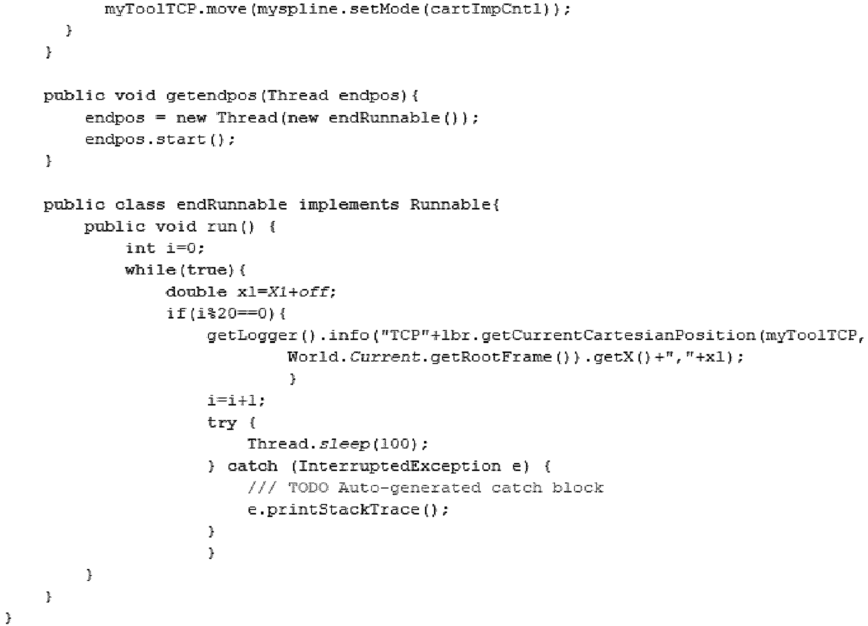

The section of the above code that provides or sets the required stiffness settings is:
cartImpCntl.parametrize(CartDOF.X) .setStiffness(4000);
cartImpCntl.parametrize(CartDOF.Y) .setStiffness(500);
cartImpCntl.parametrize(CartDOF.Z) .setStiffness(4000);

It can be clearly seen that the stiffness/impedance value (500) set in the y axis is considerably lower than that set for both the x and z axes (4000). The result is that positional control in the x and z axes can remain very precise, so that the location and shape of the edge can be reliably maintained, while there is more compliance in the positional control along the edge to accommodate differences in material properties, irregularities of the surface being finished etc. The described impedance setting (with a low stiffness along the edge to be chamfered, and a high stiffness along other directions) enables a human operator to have easy guidance along the edge to be chamfered and also minimizes the chances of the tool slipping.

The method was found to produce an edge possessing superior quality when compared to a conventional manual chamfering operation.

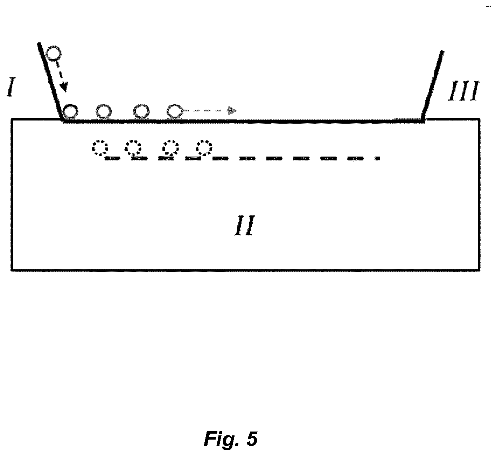

**Figure 5** provides further illustration of tool motion, including spline motion at the regions marked I and III, with linear motion in the region at II. A spline motion block is available in the Sunrise.Workbench software is used to implement the robot motion in the compliant mode.

For example:

```
 Spline myspline = new Spline(
 lin(P1).setCartVelocity(60),
 lin(P2) .setCartVelocity(100),
 lin(P3) .setCartVelocity(60),
 lin(P0) .setCartVelocity(200)
 );
```

It will be understood that the scope of the application is not limited to the embodiment(s) above-described and various modifications and improvements can be made without departing from the concepts described herein. Except where mutually exclusive, any of the features may be employed separately or in combination with any other features and the disclosure extends to and includes all combinations and sub-combinations of one or more features described herein.

The disclosed system may enable human-robot collaboration and may provide one or more of the following benefits:
- Prevent Hand-Arm Vibration (HAV) syndrome
- Alternative to expensive robot-cells
- Operator-independent, consistent outcome, Right-First Time (RFT) performance.

The proposed solution allows a human operator to work alongside a robot thereby achieving a collaborative system where the cognitive skills from human and the high precision/accuracy characteristics of the robot are best utilized to accomplish the tasks.

## Claims

1. An impedance control system for a robot arm (24), wherein stiffness values can be independently defined in first and second directions, the second direction being orthogonal to the first direction, and wherein the stiffness in said first direction is set at a lower value than the stiffness in said second direction.

2. The impedance control system according to Claim 1, wherein a stiffness value can be independently set in a third orthogonal direction.

3. The impedance control system according to Claim 2, wherein the stiffness in said first direction is set at a lower value than the stiffness in said third direction.

4. The impedance control system according to Claim 2 or Claim 3, wherein the stiffness in said second direction is set at an equal value to the stiffness in said third direction.

5. Material removal apparatus comprising a robot arm (24), a tool (26) for removing material supported by the robot arm (24) and an impedance control system according to any preceding claim.

6. A method of machining a workpiece (30) comprising material removal apparatus according to any preceding claim, wherein said first direction is the direction of movement of a tool across the workpiece.

7. The method of machining a workpiece (30) according to Claim 6, wherein movement of the tool (26) across the workpiece is controlled by a human operator.

8. The method of machining a workpiece (30) according to Claim 6, wherein movement of the tool across the workpiece is automated.

9. The method of machining a workpiece (30) according to Claim 8, wherein said first direction is defined by a tool path provided to the control system.

10. The method of machining a workpiece (30) according to any one of Claims 6 to 9, wherein the machining comprises finesse finishing of a component.
